# EUROPÄISCHE PATENTANMELDUNG

(11) **EP 1 167 101 A1**
(43) Veröffentlichungstag der Anmeldung: **02.01.2002**
(21) Anmeldenummer: 01115494.5
(22) Anmeldetag: 27.06.2001
(51) Int. Cl.: B60J 7/12

(54) **Faltdach für Kraftfahrzeuge**

(30) Priorität: 27.06.2000 FR 0008209
(71) Anmelder: Webasto Vehicle Systems International GmbH, 82131 Stockdorf (DE)
(72) Erfinder: Guicheteau, Jean-Luc, 49300 Cholet (FR)
(74) Vertreter: Wiese, Gerhard

(57) **Zusammenfassung**

Die Erfindung betrifft ein Faltdach mit einem beweglichen Teil (1), das parallele Hauptspriegel (7) aufweist, die jeweils mit einem Schlitten (6) verbunden sind, welcher geeignet ist, sich längs einer Schiene (5) zu bewegen, und das freie Hilfsspriegel (9) aufweist, wobei jeder Hilfsspriegel (9) mit einem Schlitten (6) durch einen Gelenkarm (8) verbunden ist. Jeder Schlitten (6) weist erste Freigabemittel (13) auf, welche geeignet sind, beim Schließen des Daches mit einer in der Schiene ausgebildeten Aufnahme (40) in Kontakt zu kommen, und zweite Freigabemittel (17) auf, welche geeignet sind, in Ergänzungsmittel (18) des folgenden Schlittens (6) bei der Öffnung des Daches in Eingriff zu kommen, wobei das Eingreifen der genannten zweiten Mittel (17) mit den Ergänzungsmitteln (18) ergänzt wird durch die Freigabe der genannten ersten Eingriffsmittel (13) aus ihrer Aufnahme (40) in der Schiene.

## Beschreibung

Die vorliegende Erfindung betrifft ein Faltdach für Kraftfahrzeuge, mit einem einen Rahmen bildenden karosseriefesten Teil und einem mit Stoff bezogenen und mit parallelen Haupt- und Hilfsspriegeln versehenen Stoffteil, wobei die Spriegel insbesondere dazu dienen, den Stoff in der Schließstellung des Daches in dem genannten Rahmen zu stützen und gespannt zu halten.

Bei dieser Art von Dach ist jeweils jeder der gegenüberliegenden seitlichen Ränder der Karosserie mit einer Schiene versehen. Jeder Hauptspriegel ist an jedem Ende mit einem jeweiligen Schlitten fest verbunden, welcher geeignet ist, sich längs der entsprechenden Schiene zwischen einer Schließstellung des Daches, bei der die Schlitten ein und derselben Schiene voneinander entfernt sind, und einer Offenstellung des Daches, bei der sie angenähert sind, zu bewegen.

Hilfsspriegel, die bezogen auf die Schienen frei beweglich und zueinander und zu den beweglichen Hauptspriegeln parallel sind, sind jeweils an jedem Ende über einen auf dem genannten Schlitten montierten Gelenkarm mit einem entsprechenden Schlitten verbunden und zwischen einer Schließstellung des Daches, in der sich der Arm in einer im wesentlichen zu den Schienen parallelen Richtung erstreckt, und einer Offenstellung des Daches, bei der der Arm sich schräg oberhalb der durch die Schienen definierten Oberfläche erstreckt, beweglich. In der Offenstellung bildet der Stoff untere Falten auf der Höhe der Hauptspriegel und obere Falten auf der Höhe der Hilfsspriegel.

Die Öffnung und die Schließung des Daches können elektrisch gesteuert werden; der Kopfschlitten oder Mitnehmerschlitten schiebt oder zieht die aufeinanderfolgenden Schlitten nach vorn oder hinten bis zur vollständigen Freigabe des Öffnungsrahmens oder bis zur vollständigen Abdeckung desselben durch den Stoff.

Bei an sich bekannten Faltdächern dieses Typs zieht der Kopfschlitten zunächst den folgenden Schlitten, und dann wird sehr rasch die Gesamtheit der aufeinanderfolgenden Schlitten mehr oder weniger gleichzeitig geschoben oder gezogen. Wenn die Schiebebewegung nicht gleichmäßig ist, beispielsweise wegen eines Widerstandes in der Schiene oder wegen eines Fehlers bei den Führungsmitteln eines Schlittens, faltet oder spannt sich der Stoff in unvorhersehbarer Weise, schafft damit ungeordnete Falten, die die Festigkeit reduzieren, und der Mechanismus für das automatische Öffnen oder Schließen kann blockieren.

Der Erfindung liegt die Aufgabe zugrunde, diesem Risiko durch die Schaffung eines Faltdachs vorzubeugen, bei dem die Ausbildung der Falten nicht mehr von den Zufälligkeiten der Bewegung der Schlitten abhängt, sondern in einer präzisen Reihenfolge erfolgt.

Diese Aufgabe wird durch die Merkmale des Patentanspruchs 1 gelöst. Vorteilhafte Ausgestaltungen der Erfindung sind den Unteransprüchen zu entnehmen.

Erfindungsgemäß ist dieses Dach dadurch gekennzeichnet, daß zwischen einem Kopfschlitten und einem Endschlitten, welche jeweils mit der gleichen Schiene fest verbunden sind, jeder Zwischenschlitten erste freisetzbare Mittel aufweist, welche geeignet sind, in eine jeweilige Aufnahme einzugreifen, die in der genannten Schiene ausgebildet wird, um die Schlitten in einer jeweils von den anderen Schlitten entfernten Position entsprechend der Schließstellung des Daches zu halten, und dadurch, daß jeder Zwischenschlitten außerdem zweite freisetzbare Mittel aufweist, welche geeignet sind, mit ergänzenden Mitteln des folgenden Schlittens in der Richtung der Öffnung des Daches in Eingriff zu kommen, um die Schlitten in angenäherter Stellung zu halten, wobei die ersten und zweiten freisetzbaren Mittel in einer solchen Weise angeordnet sind, daß das Eingreifen der genannten zweiten Mittel eines Schlittens in die ergänzenden Mittel ergänzt wird durch die Freigabe der genannten ersten Eingreifmittel des genannten Schlittens aus ihrer jeweiligen Aufnahme in der entsprechenden Schiene.

Jeder Schlitten einer Schiene wird also in einer eigenen Aufnahme gehalten und kann erst in Richtung des Fahrzeughecks zurücklaufen, um die Öffnung des Rahmens abzudecken, wenn er mit dem vorangegangenen ihn schiebenden Schlitten fest verbunden wurde. Es entsteht also von vorne nach hinten im Rahmen schrittweise eine Kette fest verbundener Schlitten, wobei die Falten des Stoffes sich sukzessive und in präziser Weise entsprechend der Reihenfolge des Inverbindungtretens der Schlitten bilden.

Ergänzend und im Rahmen der gleichen Grundidee der Sicherung einer stets präzisen Entfaltung des Stoffes bei der Abdeckung des Rahmens durch den beweglichen Teil des Daches unterliegt die Freigabe der genannten ergänzenden Mittel durch die genannten zweiten Eingreifmittel, d.h. also mit anderen Worten die Trennung eines Schlittens bezogen auf den vorangegangenen Schlitten in der Richtung der Schließung des Daches, der Voraussetzung der vorhergehenden Neupositionierung der genannten ersten Eingreifmittel des genannten vorangegangenen Schlittens in ihrer Aufnahme in der Schiene.

So trennt sich beim Schließen des Daches die Kette der aufeinanderfolgenden Schlitten jeweils einzeln Schlitten für Schlitten, wobei sich jeder Schlitten von dem vorangehenden entfernt, der erneut in seine Schienenaufnahme eingetreten ist, um dann seinerseits in seine eigene Aufnahme in der Schiene einzutreten, was somit die Trennung des folgenden Schlittens auslöst, wobei die Gelenkarme sich nacheinander längs der Schienen in der Weise absenken, daß der gefaltete Stoff sich schrittweise spannt, was mit dem Stoffteil beginnt, der mit dem hinteren Hauptspriegel fest verbunden ist, und dies mit dem Stoffteil abschließt, der mit dem vorderen Hauptspriegel fest verbunden ist.

Weitere erfindungswesentliche Merkmale und Vorteile der Erfindung gehen aus der nachstehenden Beschreibung hervor, in der mit Bezug auf die Zeichnungen Ausführungsbeispiele erläutert werden. Es zeigt:
- Fig. 1 a-g: eine schematische Darstellung der Funktionsweise der Erfindung bei der Öffnung des Daches und beim Schließen;
- Fig. 2: eine perspektivische Ansicht der wichtigsten, den beweglichen Teil des Faltdaches bildenden Teile;
- Fig. 3: einen schematischen Längsschnitt durch eine seitliche Kante des Rahmens (unter Weglassung des Verdeckstoffs) in einer Phase einer teilweisen Öffnung des Daches; und
- Fig. 4: einen schematischen Längsschnitt, wobei sich das Dach in Offenstellung befindet.

Das Dach, welches den Gegenstand der Erfindung bildet, ist ein Faltdach für Kraftfahrzeuge, welches einen beweglichen Teil 1 aufweist, der durch einen Außenstoff 2 und durch einen Innenstoff 3 abgedeckt ist und welcher geeignet ist, einen karosseriefesten, den Rahmen 4 bildenden Teil abzudecken und öffnen.

Zwei gegenüberliegende seitliche Kanten des Rahmens 4 sind jeweils mit einer (nicht dargestellten) Gleitschiene 5 mit U-förmigem Querschnitt versehen, die nach oben offen ist und die zur Aufnahme von Schlitten 6, 60, 61 dient, die den Betätigungsmechanismus des Faltdachs tragen.

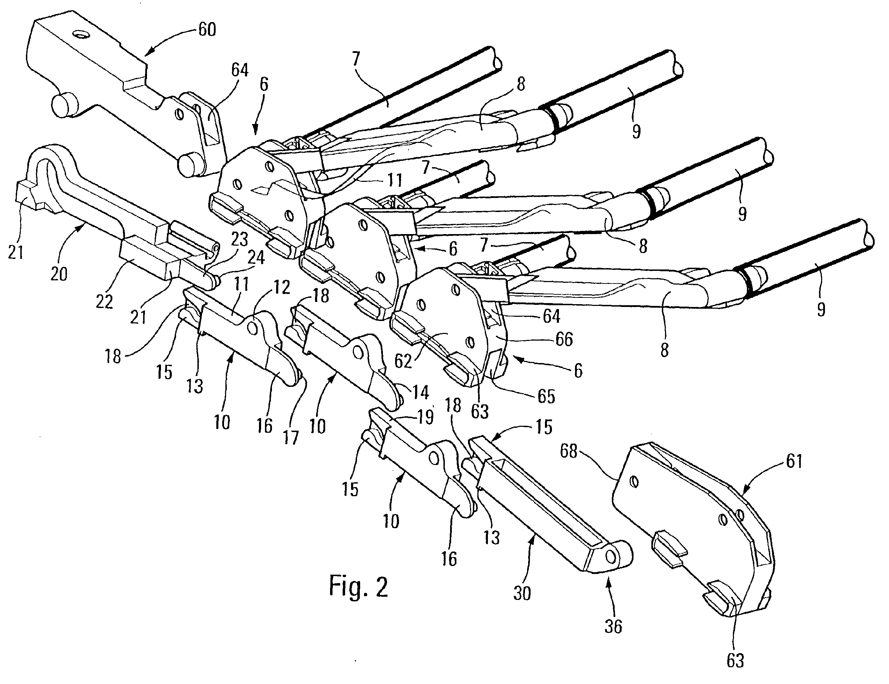

Wie am besten in Fig. 2 zu sehen ist, weisen diese Schlitten je nach ihrer Lage in der Schiene 5 drei unterschiedliche Ausgestaltungen auf, wobei mehrere Zwischenschlitten 6 durch einen Kopfschlitten 60 und einen Endschlitten 61 eingerahmt werden.

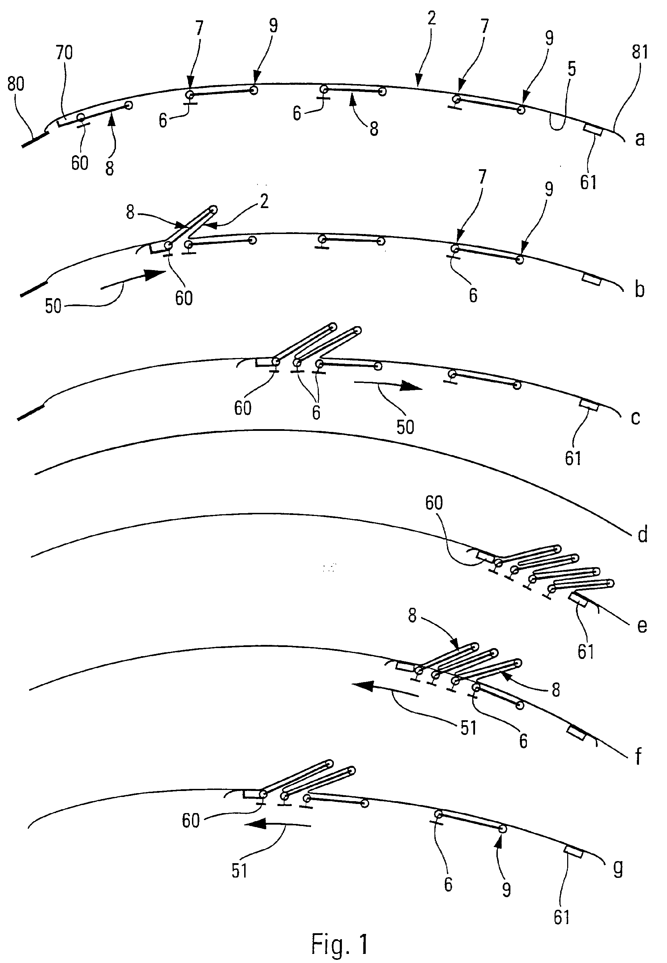

Vor einer detaillierten Beschreibung dieser Schlitten wird zunächst der Mechanismus grundsätzlich beschrieben, wie er insbesondere in Fig. 1 mit verschiedenen Öffnungs- und Schließstellungen des Daches dargestellt ist.

Der bewegliche Teil 1 des Daches umfaßt einerseits eine Reihe von parallelen Hauptspriegeln 7 in einer zu den Schienen 5 senkrechten Richtung, welche geeignet sind, sich längs dieser Schiene zu bewegen, und andererseits parallel zu den Hauptspriegeln 7 eine Reihe von Hilfsspriegeln 9, welche bezüglich der Schienen 5 frei beweglich sind.

Die Schlitten 6 in einer Schiene 5, denen an der gegenüberliegenden Schiene identische Schlitten entsprechen, ermöglichen die Führung der Hauptspriegel 7, deren Ende jeweils mit einem Schlitten 6 verbunden ist oder, genauer gesagt, in dem dargestellten Beispiel mit dem unteren Ende eines Armes 8, wobei letzterer auf dem Schlitten 6 in einer um eine zu den Schienen 5 quer verlaufende Achse gelenkigen Weise montiert ist.

Jedes Paar jeweils gegenüberliegend angeordneter Gelenkarme 8 trägt an seinem oberen Ende einen freien Hilfsspriegel 9, der somit mit dem Schlitten 6 und dadurch indirekt auch mit einem Hauptspriegel 7 verbunden ist.

Die Schlitten 6 sind geeignet, sich längs der Schienen 5 zwischen einer Schließstellung des Daches, bei der die Schlitten ein und derselben Schiene voneinander getrennt sind (siehe Fig. 1a), und einer Offenstellung des Daches, bei der sie aneinander angenähert sind (siehe Figuren 1e, 2 und 4) zu bewegen, während die Arme 8 auf den Schlitten 6 zwischen einer Schließstellung des Daches, bei der sie sich in einer im wesentlichen zu den Schienen parallelen Richtung erstrecken (Fig. 1a), und einer Offenstellung des Daches, bei der sie sich schräg oberhalb der durch die Schienen definierten Oberfläche erstrecken, angelenkt sind (siehe Figuren 1e, 2 und 4).

In dieser Offenstellung bildet der Außenstoff 2 auf der Höhe der Hauptspriegel 7 untere Falten 20 und auf der Höhe der Hilfsspriegel 9 obere Falten 21, die beispielsweise jeweils in eine entsprechende an dem Stoff 2 befestigte Hülle eingeführt werden.

Unter Bezugnahme auf Fig. 1 entspricht Fig. 1a der Schließstellung des Daches, wobei sich die Schlitten 6 ein und derselben Schiene für eine gute Spannung des Stoffes in einem relativen Maximalabstand befinden, wobei dieser Abstand im wesentlichen zwei Stücken des Stoffes 2 entspricht, welcher zwischen einem Hauptspriegel 7 und einem Hilfsspriegel 9 gespannt wird. Die einen Hauptspriegel 7 und einen Hilfsspriegel 9 verbindenden Arme 8 erstrecken sich dann in einer zu den Schienen 5 im wesentlichen parallelen Richtung.

Die Figuren 1b und 1c zeigen den Mechanismus der schrittweisen Öffnung nach hinten (im Sinne der Pfeilrichtung 50) durch Annähern und Verbinden zweier aufeinanderfolgender Schlitten 6 ausgehend vom Kopfschlitten oder Antriebsschlitten 60 in der Weise, daß eine Kette aufeinanderfolgender Schlitten bis zu einer Position der vollständigen Freigabe der Öffnung des Rahmens (Fig. 1d) gebildet wird, wobei der mit dem hinteren Spriegel 71 fest verbundene Schlitten 61 über die dargestellte Kurve des Rahmens hinaus zurückgelaufen ist.

Die Positionen e, f und g stellen die schrittweise Schließung nach vorne (in Richtung der Pfeile 51) mit sukzessiver Trennung der Schlitten 6 von der Wirkungskette ausgehend vom Endschlitten 61 dar.

Jetzt werden unter Bezugnahme auf Fig. 2 die Schlitten 6, 60, 61 und die Eingriffs-und Freigabemittel, welche sie aufweisen und die die Erfindung kennzeichnen, beschrieben. Diese ermöglichen die oben beschriebene Ausbildung der Kette der Öffnung des Daches und deren Trennung beim Schließen des Daches.

Jeder Zwischenschlitten 6 weist einen Körper 62 mit einem im Längsschnitt im wesentlichen trapezartiger Form auf, welcher an jeder seiner unteren Längskanten jeweils Führungsprofile 63 aufweist, welche geeignet sind, den Schlitten längs der U-förmigen Gleitschiene 5 zu halten und zu führen.

Jeder Körper 62 des Schlittens weist an seinem oberen Teil eine durchgängige Längsauskehlung 64 auf, welche nach oben offen ist, um das untere Ende eines Gelenkarms 8 aufzunehmen. Eine Rückholfeder ist in der genannten Auskehlung 64 unter dem Arm 8 befestigt, um letzteren bei der Annäherung der Schlitten 6 in eine bezüglich der Ebene der Schiene 5 schräge Stellung zurückzuführen.

Jeder Körper 62 weist außerdem an seiner unteren Seite eine durchgängige Längsauskehlung 65 auf, welche nach unten offen ist, um ein Bauteil 10 aufzunehmen, das die Eingriffs- und Freigabemittel aufweist, welche für die Erfindung besonders charakteristisch sind.

Das Bauteil 10, welches eine längliche Form hat, ist geeignet, sich im Inneren der Auskehlung 65 des Schlittens im wesentlichen in der Richtung bzw. längs der Schiene 5 zu erstrecken. Es weist ein vorderes Ende 15 und ein hinteres Ende 16 (in bezug auf die Richtung 51 zum Fahrzeug-Vorderteil und auf die Richtung 50 zum Fahrzeugheck) auf.

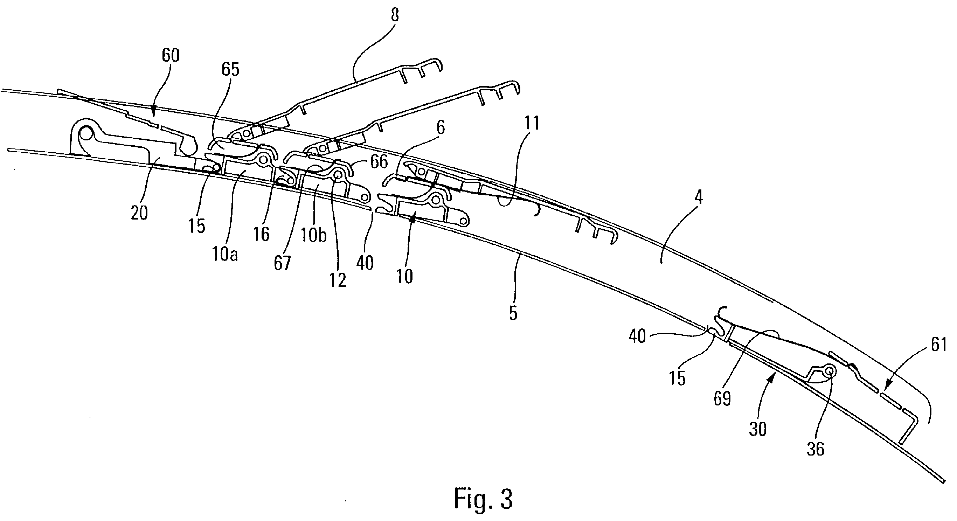

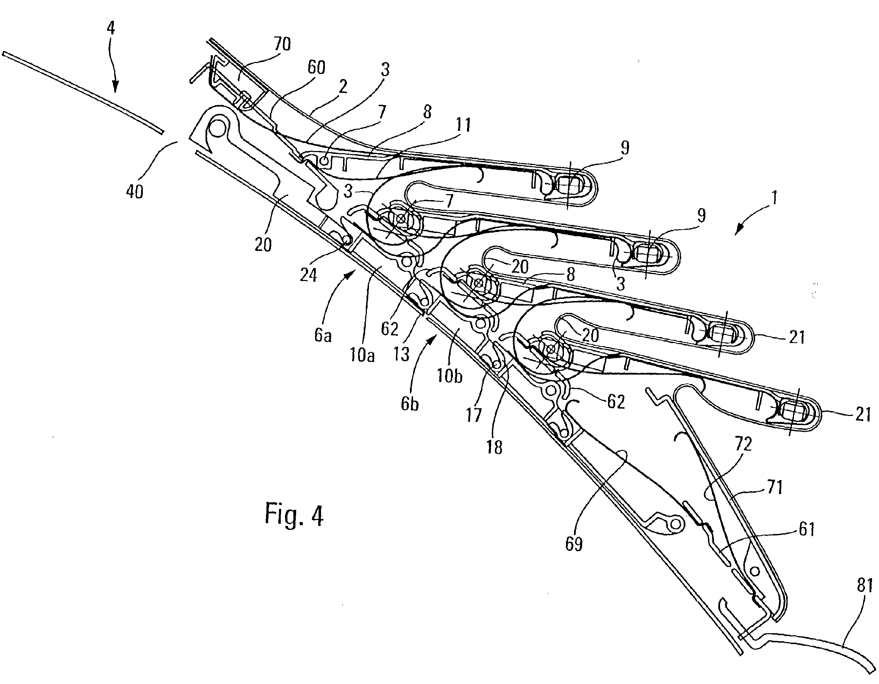

Das Bauteil 10 weist an seiner oberen Wand 11 eine Ausbeulung 12 auf, welche geeignet ist, gegen eine seitliche hintere Wand 66 des Schlittens anzuschlagen, womit die Öffnung der Auskehlung 65 eingeschränkt wird (siehe Figuren 3 und 4).

Das Bauteil 10 ist im übrigen mit dem Körper 62 des Schlittens durch eine Blattfeder 67 verbunden, die sich schräg zwischen dem oberen Teil des Körpers 62 und dem oberen Teil des vorderen Endes 15 des Bauteils 10 vor der genannten Ausbeulung 12 (in Richtung Vorderwagens 51) in der Weise erstreckt, daß sie sich wie ein Hebel im Inneren des Körpers 62 des Schlittens um eine zur Schiene 5 quer verlaufende Achse drehen kann, wobei sich beide Enden 15, 16 heben oder senken können.

Bei diesem Beispiel wird das vordere Ende 15 des Hebels 10 permanent durch die Feder 67 nach unten beaufschlagt, um den Hebel 10 in eine Richtung entgegen dem Uhrzeigersinn drehen zu lassen.

Das Bauteil 10, das den Hebel bildet, trägt in einem Überstand auf der unteren Fläche seines vorderen Endes 15 einen Zapfen oder eine Stufe 13, welche geeignet ist, unter der Wirkung der Feder 67 in eine entsprechende Aufnahme 40 der Schiene einzugreifen (siehe Fig. 3), um die Schlitten in ihrem relativen Maximalabstand in der Schließstellung des Daches zu halten.

Das hintere Ende 16 jedes Bauteils 10 trägt bezüglich einer vertikalen Wand 14 überstehend einen Finger 17, welcher geeignet ist, in eine entsprechende Nut 18 einzugreifen, die in einer vertikalen Wand 19 des vorderen Endes 15 eines benachbarten Bauteils 10 angeordnet ist. Die Wände der Nut 18, die in der Weise gekrümmt ist, daß sie in der Richtung 50 nach hinten zunächst ansteigt und dann absenkt, weisen eine solche Neigung auf, daß das Eingreifen des Fingers 17 eines Bauteil s 10 in die Nut 18 eines benachbarten Bauteils 10 in der Richtung 50 nach hinten das Drehen des Bauteils 10 bewirkt, genauer gesagt das Anheben seines vorderen Endes 15 und das Verlassen der Stufe 13 aus seiner zugeordneten Aufnahme 40 an der Schiene 5.

Es ist anzumerken, daß die Wand 14 des hinteren Endes, welche den Finger 17 trägt, und die Wand 19 des vorderen Endes, welche die Nut 18 aufweist, vertikale, sich in der Dicke ergänzende Wände in der Weise sind, daß die Abfolge von zwei nebeneinanderliegenden, durch ihre in Eingriff stehenden Enden 16 und 15 fest verbundene Bauteile 10 eine im wesentlichen gleiche Stärke aufweist, welche an die Breite der durchgängigen Auskehlung 65 angepaßt ist, die im wesentlichen ebenfalls konstant ist.

Wie in den Figuren 3 und 4 zu sehen ist, ist das Bauteil 10 in dem Körper 62 des Schlittens in der Weise eingesetzt, daß das vordere Ende 15, das die Nut aufweist, vollständig in der Auskehlung 65 zu liegen kommt, während das hintere Ende 16, das den Eingreif-Finger 17 trägt, darüber hinaussteht.

Auf der Höhe des festen vorderen Spriegels 80 des Rahmens 4 trägt der Kopfschlitten oder Antriebsschlitten 60 ebenfalls in einer oberen Auskehlung 64 einen Gelenkarm 8, welcher auf einer Feder 11 montiert ist, die im wesentlichen zu den Organen gleicher Bezugszeichen identisch ist, die für die Zwischenschlitten 6 beschrieben wurden (siehe Fig. 4). Er ist im übrigen geeignet, in ein Bauteil 20 einzugreifen, das mit seitlichen Führungsmitteln 21 versehen ist, wobei das Bauteil 20 außerdem Eingriffs- und Freigabemittel aufweist, die analog zu den Eingriffs-und Freigabemitteln 17 der Zwischenschlitten 6 sind: Das Bauteil 20 setzt sich in Längsrichtung nach hinten durch eine vertikale Wand 23 fort, die einen Finger 24 analog zum Finger 17 der Schlitten 6 trägt und geeignet ist, in die Nut 18 des ersten benachbarten Bauteils 10 einzugreifen.

Wie schematisch in Fig. 4 dargestellt, trägt der vordere Schlitten 61 einen beweglichen Spriegel 70, an dem die vorderen Enden des oberen Stoffes 2 und des unteren Stoffes 3 befestigt sind.

Auf der Höhe des festen hinteren Spriegels 81 des Rahmens 4 weist der Endschlitten 61 wie die Zwischenschlitten 6 seitliche Führungsprofile 63 auf, die es ihm ermöglichen, sich längs der Schiene 5 zu bewegen.

Im Gegensatz dazu weist der Endschlitten 61 an seinem unteren Teil eine nur an der Vorderfläche des Schlittens offene Auskehlung 68 auf, welche dazu bestimmt ist, ein Bauteil 30 aufzunehmen, dessen Vorderteil 15, das im wesentlichen zu denen des Bauteils 10 der Zwischenschlitten 6 identisch ist, ebenfalls eine Nut 18 aufweist, welche geeignet ist, durch einen Finger 17 eines Bauteils 10 erfaßt zu werden, sowie eine Stufe 13, welche geeignet ist, in eine jeweilige Aufnahme 40 der Schiene 5 einzugreifen.

Das Bauteil 30 ist in der Auskehlung 68 durch sein hinteres Ende 36 in der Weise befestigt, daß es sich um eine zur Schiene 5 quer verlaufende Achse zwischen einer unteren Position der Erfassung der Stufe 13 in ihrer Aufnahme 40 der Schiene und einer freigegebenen Position der letzteren bewegen kann. Ebenso wie das Bauteil 10 hat also das Bauteil 30 eine Funktion als Hebel, dessen vorderes Ende 15 durch eine Rückholfeder 69 in seiner niedrigen Position beaufschlagt wird, welche sich zwischen dem oberen Teil des Schlittens 61 und dem vorderen Ende 15 des Bauteils 30 erstreckt.

Jeder Schlitten 61 weist einen hinteren beweglichen Spriegel 71 auf, an dem die hinteren Enden der Stoffe 2 und 3 befestigt sind, wobei dieser Spriegel 71 durch eine Feder 72 in Aufwärtsrichtung beaufschlagt wird.

Die Schienen 5 erstrecken sich in Richtung des Hecks des Fahrzeuges über die Aufnahme 40 hinaus, die für die Stufe 13 des Bauteils 30 vorgesehen ist, um ein Rücklaufen des Endschlittens 61 gegebenenfalls bis zum oberen Ende der (nicht dargestellten) Heckscheibe zu ermöglichen.

Jetzt wird das Funktionieren des Öffnungs- und Schließmechanismus des erfindungsgemäßen Schiebedaches erklärt, wobei es klar ist, daß er in symmetrischer Weise an beiden gegenüberliegenden Schienen 5 funktioniert.

In der Schließstellung des Daches befinden sich die Schlitten 60, 6 und 61 in ihrer maximal beabstandeten Lage, wie dies in Fig. 1a gezeigt wird.

Bei der Öffnung wird der von klassischen Motorisierungsmitteln an sich bekannter Art angetriebene (nicht dargestellte) Antriebsschlitten 60 von dem vorderen Spriegel 80 in der Weise entriegelt, daß er sich über das Bauteil 20 längs der Schiene 5 in Richtung des Hecks des Fahrzeuges bewegen kann. Nach Eintreffen auf der Höhe des ersten Zwischenschlittens 6 greift der Finger 24 des Bauteils 20 in die Nut 18 des Bauteils 10 ein und hebt dabei das vordere Ende 15 des letzteren gegen die Wirkung der Rückholfeder 67 an und gibt damit die Stufe 13 aus ihrer Aufnahme 40 in der Schiene frei.

Der erste Zwischenschlitten 6, der sich jetzt frei auf der Schiene 5 bewegen kann und von dem Antriebsschlitten 60 bewegt wird, mit dem er fest verbunden ist, bewegt sich seinerseits in Richtung des Hecks des Fahrzeuges. Auf der Höhe des zweiten Zwischenschlittens 6 angekommen, verbindet er sich seinerseits mit letzterem durch das Eingreifen des Fingers 17 des Bauteils 10 in die Nut 18 des Bauteils 10, dessen vorderes Ende sich seinerseits anhebt und damit wie vorher die Stufe 13 aus ihrer Aufnahme 40 in der Schiene freigegeben wird.

Es bildet sich so bis zur vollständigen Öffnung des Daches schrittweise eine Kette fest verbundener Schlitten, wenn sich der letzte Schlitten 6 mit dem Endschlitten 61 verbindet (Fig. 1e).

Dieser ist ebenso wie die anderen Zwischenschlitten 6 mit freisetzbaren Eingriffsmitteln, d.h. also einer Stufe 13 und einer Nut 18, versehen, die das Bauteil 30 ebenfalls zu einem Hebel machen. Er kann noch weiter bis zum hinteren Ende der Schiene, beispielsweise bis zur Heckscheibe, zurücklaufen, wenn das vorgesehen ist.

Bei der Schließstellung des Daches bewegt sich der Antriebsschlitten 60 in Richtung des Fahrzeug-Vorderteils und nimmt sukzessive die Kette der miteinander fest verbundenen Schlitten 6 und 61 mit. Sobald der Endschlitten 61 seinen Verankerungspunkt in der Schiene 5 wieder erreicht hat, mit anderen Worten, wenn also die Stufe 13 des Bauteils 30 erneut in der Aufnahme 40 der Schiene positioniert ist, begünstigt die Änderung der Neigung seiner Nut 18 die Freigabe des Fingers 17 des Bauteils 10 vom hinteren Zwischenschlitten 6.

Nachdem der Endschlitten 61 so fixiert wurde, setzt der freigegebene hintere Zwischenschlitten 6 seinen Weg nach vorne auf der Schiene 5 solange fort, bis auch er seinen Verankerungspunkt findet, d.h. also mit anderen Worten, bis die Stufe 13 seines Bauteils 10 sich erneut in der Aufnahme der Schiene 40 positioniert hat, womit die daraus folgende Neigung der Nut 18 somit den folgenden Schlitten 6 freigibt.

Die Kette löst sich somit schrittweise auf. Die Stoffstücke zwischen zwei beabstandeten Schlitten spannen sich nacheinander und senken die Hebel 8 nacheinander in einer fehlerlosen Ordnung gegen die Wirkung der Rückholfeder 11, bis der vordere Zwischenschlitten 6 erneut seinen Verankerungspunkt in der Schiene erreicht hat.

Der auf dem Bauteil 20 montierte Antriebsschlitten 60 setzt allein seine Bewegung nach vorne bis zur endgültigen vorderen Position fort, in der er an dem vorderen Spriegel 80 verriegelt wird.

Die beschriebenen Mittel ermöglichen somit die Aufrechterhaltung der beabstandeten oder fest verbundenen Positionen der Schlitten zueinander. Die Annäherung oder die Entfernung von Schlitten wird dabei jeweils nur für zwei aufeinanderfolgende Schlitten zugelassen, während die anderen Schlitten in ihrer Lage der maximalen Beabstandung oder der gegenseitigen festen Verbindung gehalten werden. Das Falten oder das Entfalten des Stoffdaches erfolgt damit Stück für Stück in präziser Reihenfolge, d.h. stets beginnend mit dem Antriebs- oder Kopfschlitten, und geht dann weiter über jeden Zwischenschlitten bis zum Endschlitten.

Natürlich ist die Erfindung nicht beschränkt auf die beschriebenen Ausführungsformen, und an diesen können zahlreiche Änderungen angebracht werden, ohne damit den Erfindungsrahmen zu verlassen.

So könnten die hebelartigen Bauteile in den Schlitten in der Weise angeordnet werden, daß ihr vorderes Ende (in Richtung zum Fahrzeug-Vorderteil) und nicht ihr hinteres Ende, wie beschrieben, über die Auskehlung des Schlittens übersteht.

## Patentansprüche

1. Faltdach für Kraftfahrzeuge mit einem beweglichen, mit Stoff (2, 3) bezogenen Teil (1), welcher geeignet ist, einen einen Rahmen (4) bildenden karosseriefesten Teil abzudecken und zu öffnen, wobei die beiden seitlichen gegenüberliegenden Ränder des Rahmens (4) jeweils mit einer Schiene (5) versehen sind und der genannte bewegliche Teil (1) bewegliche parallele Haupt- und Hilfsspriegel (7 bzw. 9) aufweist, von denen die Hauptspriegel (7) jeweils fest mit einem Schlitten (6) verbunden sind, welcher längs der entsprechenden Schiene (5) zwischen einer Schließstellung des Daches, bei der die Schlitten (6) ein und derselben Schiene (5) voneinander beabstandet sind, und einer Offenstellung des Daches, bei der sie aneinander angenähert sind, bewegbar ist, und wobei für jeden Hauptspriegel (7) ein freier Hilfsspriegel (9) vorgesehen ist, der mit einem Ende mit einem jeweiligen Schlitten (6) durch einen Arm (8) verbunden ist, welcher gelenkig auf dem genannten Schlitten zwischen einer Schließstellung des Daches, in der sich der Arm (8) in einer im wesentlichen zu den Schienen (5) parallelen Richtung erstreckt, und einer Offenstellung des Daches, bei der der Arm (8) sich schräg oberhalb der durch die Schienen (5) definierten Oberfläche erstreckt, montiert ist und wobei der Stoff (2) untere Falten (20) auf der Höhe der beweglichen Hauptspriegel (7) und obere Falten (21) auf der Höhe der freien Hilfsspriegel (9) bildet, **dadurch gekennzeichnet, daß** die die Hauptspriegel (7) tragenden und die Zwischenspriegel (9) lagernden Schlitten als ein Kopfschlitten (60) und ein Endschlitten (61) mit dazwischen angeordneten Zwischenschlitten (6) ausgebildet sind, die erste freisetzbare Mittel (13) aufweisen, welche geeignet sind, in eine jeweilige Aufnahme (40) einzugreifen, die in der genannten Schiene (5) ausgebildet ist, um den genannten Schlitten (6) in einer von den anderen Schlitten (6) entfernten Position entsprechend der Schließstellung des Daches zu halten, und dadurch, daß jeder Zwischenschlitten (6) außerdem zweite freisetzbare Mittel (17) aufweist, welche geeignet sind, mit ergänzenden Mitteln (18) des folgenden Schlittens (6) in der Richtung der Öffnung des Daches in Eingriff zu kommen, um die Schlitten (6) in einander angenäherter Stellung zu halten, wobei die ersten und zweiten freisetzbaren Mittel (13, 17) in einer solchen Weise angeordnet sind, daß das Eingreifen der genannten zweiten Mittel (17) eines Schlittens (6) mit den ergänzenden Mitteln (18) ergänzt wird durch die Freigabe der genannten ersten Eingriffsmittel (13) des genannten Schlittens (6) aus ihrer jeweiligen Aufnahme (40) in der entsprechenden Schiene (5).

2. Faltdach nach Anspruch 1, **dadurch gekennzeichnet, daß** die Freigabe der genannten zweiten Eingriffsmittel (17) bezogen auf die genannten Ergänzungsmittel (18) bedingt wird durch die vorherige Repositionierung der genannten ersten Eingriffsmittel (13) in ihrer jeweiligen Aufnahme (40) der entsprechenden Schiene (5).

3. Faltdach nach einem der Ansprüche 1 oder 2, **dadurch gekennzeichnet, daß** die genannten Eingriffsmittel (13) eines Zwischenschlittens (6) mit der Schiene (5) und mit dem jeweils folgenden Schlitten (6) von ein und demselben Bauteil (10) getragen werden, welches einen Hebel bildet und im Inneren jedes Zwischenschlittens (6) in der Weise gelagert ist, daß es sich um eine bezüglich der Schiene (5) quer verlaufende Achse zwischen einer Position des Eingreifens in die genannte Aufnahme (40) der Schiene und einer von dieser freigegebenen Position bewegen kann.

4. Faltdach nach Anspruch 3, **dadurch gekennzeichnet, daß** die genannten ersten Eingriffsmittel in die genannte Aufnahme (40) der Schiene durch eine Stufe (13) gebildet werden, die über eine vordere Endwand (15) Bauteils (10) übersteht, und dadurch, daß die zweiten Eingriffsmittel, welche geeignet sind, in die Ergänzungsmittel einzugreifen, durch einen Finger (17) gebildet werden, der über eine hintere Endwand (16) des genannten Bauteils (10) übersteht, und dadurch, daß die genannten Ergänzungsmittel durch eine Nut (18) gebildet werden, die in einer vorderen Endwand (15) des genannten Bauteils (10) angebracht ist, wobei die Wände der Nut (18) eine solche Neigung aufweisen, daß das Eingreifen des Fingers (17) in die Nut (18) das Drehen des Bauteils (10), der die erfaßte Nut aufweist, und das gleichzeitige Heraustreten der genannten Stufe (13) aus der Aufnahme (40) der Schiene bewirkt.

5. Faltdach nach Anspruch 4, **dadurch gekennzeichnet, daß** das Bauteil (10) in einer durchgängigen Auskehlung (65) des Körpers (62) des Schlittens (6) aufgenommen wird, wobei eines der beiden Enden (15, 16) des Bauteils (10) über den Schlittenkörper (62) übersteht und das andere Ende (16, 15) vollständig im Schlittenkörper (62) zu liegen kommt.

6. Faltdach nach Anspruch 4 oder 5, **dadurch gekennzeichnet, daß** die genannte Wand (14) des hinteren Endes (16), welches den Finger (17) trägt, und die genannte Wand (19) des vorderen Endes (15), welches die Nut (18) trägt, vertikale Wände (14, 19) sind, die sich in der Stärke in der Weise ergänzen, daß die Abfolge der genannten Bauteile (10), die durch ihre im Eingriff befindlichen Enden (16, 15) fest verbunden sind, eine im wesentliche gleiche Stärke aufweisen, welche einer im wesentlichen gleichen Stärke der genannten durchgängigen Auskehlung (65) des Schlittenkörpers (62) entsprechen.

7. Faltdach nach einem der Ansprüche 5 oder 6, **dadurch gekennzeichnet, daß** die genannte Auskehlung (65) im unteren Teil des Schlittenkörpers (62) ausgebildet ist, wobei das Bauteil (10) an seiner oberen Wand (11) eine Ausbeulung (12) aufweist, welche geeignet ist, gegen eine hintere Seitenwand (66) des Schlittenkörpers (62) anzustoßen, womit die Öffnung der genannten Auskehlung (65) eingeschränkt wird, und dadurch, daß das Bauteil (10) mit dem Schlittenkörper (62) durch eine Blattfeder (67) fest verbunden wird, die sich schräg zwischen dem oberen Teil des Schlittenkörpers (62) und dem vorderen Ende (15) des Bauteils (10) vor der genannten Ausbeulung (12) erstreckt.

8. Faltdach nach einem der Ansprüche 1 bis 7, **dadurch gekennzeichnet, daß** der Kopfschlitten oder Antriebsschlitten (60) Eingriffs- und Freigabemittel (24) analog zu den Eingriffs- und Freigabemitteln (17) der Zwischenschlitten (6) aufweist.

9. Faltdach nach einem der Ansprüche 1 bis 8, **dadurch gekennzeichnet, daß** der Endschlitten (61) Ergänzungsmittel (18) analog zu den genannten Ergänzungsmitteln (18) der Zwischenschlitten (6) aufweist, sowie erste freisetzbare Mittel (13), welche geeignet sind, in eine Aufnahme (40) einzugreifen, die in der Schiene (5) ausgebildet wurde, wobei sich diese in Richtung des Fahrzeugshecks über die genannte Aufnahme (40) hinaus erstreckt, um ein Rücklaufen des Endschlittens (61) zu ermöglichen.

10. Faltdach nach Anspruch 9, **dadurch gekennzeichnet, daß** die Schiene (5) sich im wesentlichen bis zum oberen Ende der Heckscheibe erstreckt.
